# EUROPÄISCHE PATENTSCHRIFT

(11) **EP 1 222 403 B1**
(45) Veröffentlichungstag und Bekanntmachung des Hinweises auf die Patenterteilung: **28.05.2003**
(21) Anmeldenummer: 00975880.6
(22) Anmeldetag: 18.10.2000
(51) Int. Cl.: F15B 15/08

(54) **BETÄTIGUNGSVORRICHTUNG FÜR EIN DREHBARES VERSCHLUSSTEIL EINES VENTILS**
OPERATING DEVICE FOR A ROTATABLE CLOSING ELEMENT OF A VALVE
DISPOSITIF D'ACTIONNEMENT POUR UN ELEMENT D'OBTURATION ROTATIF D'UNE SOUPAPE

(30) Priorität: 21.10.1999 DE 19950582
(43) Veröffentlichungstag der Anmeldung: 17.07.2002
(73) Patentinhaber: TUCHENHAGEN GmbH, 21514 Büchen (DE)
(72) Erfinder: SCHMID, Werner, 89522 Heidenheim (DE); SAUER, Martin, 86687 Kaisheim (DE); WENGERT, Holger, 73441 Bopfingen (DE); WIEDENMANN, Willi, 73469 Riesbürg (DE)
(86) Internationale Anmeldenummer: EP0010253
(87) Internationale Veröffentlichungsnummer: WO01029432

(56) Entgegenhaltungen:
- EP-B- 0 622 574
- WO-A-92/19895
- DE-A- 3 303 872
- DE-U- 29 703 710
- DE-U- 29 814 551
- FR-A- 2 528 128
- US-A- 2 998 805
- US-A- 3 165 982
- US-A- 3 391 722
- US-A- 3 508 472
- US-A- 5 054 372

## Beschreibung

Die Erfindung betrifft eine Betätigungsvorrichtung für ein drehbares Verschlußteil eines Ventils, insbesondere ein mit Druckmittel beaufschlagbaren Drehantrieb für ein Scheiben- oder Drosselklappenventil, gemäß dem Oberbegriff des Anspruchs 1.

Eine Betätigungsvorrichtung der gattungsgemäßen Art ist aus der **FR-A- 2 528 128** bekannt. Bei dieser Vorrichtung wird das zylindrische Gehäuse aus einem unteren und einem oberen Boden und einem zwischen diesen angeordneten Mantel gebildet, wobei die beiden Zylinderböden durch zwei feststehende Längsführungen miteinander verbunden sind. Letztere durchdringen und führen jeweils einen Kolben in axialer Richtung, der gegenüber dem Mantel abgedichtet gleitet. Sowohl der Kolben als auch beide Zylinderböden werden von einer zentralen Drehwelle durchdrungen. Die mehrfache Durchdringung des Kolbens, zum einen durch die Längsführungen und zum anderen durch die Drehwelle. macht an allen diesen Durchdringungsstellen eine Abdichtung des Kolbens gegenüber einem Druckmittelraum erforderlich, der zwischen dem Kolben und dem diesem nächstliegenden Zylinderboden und dem Mantel gebildet wird. Ein dem anderen Zylinderboden zugewandter Kolbenschaft ist mit zwei diametral zueinander angeordneten, schraubenförmigen Führungsnuten versehen, die zu dem vorstehenden Zylinderboden hin offen sind. Der Kolbenschaft ist mit einer diesen überragenden Zylinderschürze verbunden, die beim Erreichen der Innenfläche des benachbarten Zylinderbodens als Anschlag für die Endlage des Kolbens dient. Die Endlagenbegrenzung in der anderen Richtung wird durch einen im Druckmittelraum angeordneten, im Zusammenbau der Betätigungsvorrichtung von außen nicht zugänglichen Anschlagring sichergestellt.

Eine Betätigungseinrichtung mit vergleichbaren und/oder gleichwirkenden Merkmalen ist aus der **DE 297 03 710 U1** bekannt. Dieser Drehantrieb, der insbesondere mit Druckluft als Druckmittel betrieben wird, findet vorzugsweise bei Ventilen Anwendung, bei denen das Verschlußteil grundsätzlich endlos gedreht werden kann. Dies ist beispielsweise der Fall bei sogenannten Kugel- und Scheibenventilen. Bei diesen muß durch zusätzliche Maßnahmen sichergestellt werden, daß der zugehörige Drehantrieb in der genau erforderlichen Winkelposition gestoppt wird, damit eine hinreichende Abdichtung im Sitzbereich gewährleistet ist. Zur Realisierung eines bestimmten vorgegebenen Drehwinkels sind aufgrund von immer einzuräumenden Fertigungstoleranzen, insbesondere im Bereich der Transformation zwischen Linearbewegung des Kolbens und Drehbewegung der Drehwelle, besondere Maßnahmen zur Drehwinkelbegrenzung erforderlich. Bei dem bekannten Drehantrieb wird der gewünschte Drehwinkel dadurch eingehalten, daß an der Drehwelle ein Anschlagsegment befestigt ist, daß wenigstens eine Führungsstange einen Festanschlag bildet, und daß Anschlagsegment und Führungsstange den Drehwinkel hubunabhängig und direkt auf seinen exakten Sollwert begrenzen.

Der bekannte Drehantrieb weist unter anderem den Nachteil auf, daß das Anschlagsegment nur durch einen relativ aufwendigen Austausch desselben an veränderte Drehwinkelverhältnisse anpaßbar ist. Verschleiß- und toleranzbedingte Veränderungen der Drehwinkelbegrenzung sind ohne einen derartigen Austausch nicht ohne weiteres kompensierbar.

Andere bekannte Drehantriebe offenbaren entweder überhaupt keine Merkmale hinsichtlich der Drehwinkelbegrenzung und der Drehwinkeleinstellung

(**DE 298 14 551 U1; EP 0 622 574 B1**) oder sie offenbaren zwar diesbezügliche Merkmale (**DE 33 03 872 A1**), sind jedoch in ihrem Aufbau relativ kompliziert und wenig wartungsfreundlich.

Die Betätigungsvorrichtung für einen schwenkbaren Ventilkörper eines Ventils gemäß **DE 33 03 872 A1** weist einen drehbar gelagerten Kolben auf, in dessen äußeren Kolbenmantel zwei diametral zueinander angeordnete Kurvenführungen eingearbeitet sind, die die Form von schrägen Nuten aufweisen. In diese Nuten greifen Mitnehmer-Rollen ein, die um in einer Zylinderwand der Betätigungsvorrichtung befestigte Achsen-drehbar sind. Eine Abtriebswelle zur Betätigung des schwenkbaren Ventilkörpers ist innerhalb des Kolbens mit diesem sowohl axial als auch radial formschlüssig verbunden. Bei dieser Anordnung führt demnach der Kolben nicht nur eine gegen eine Rückstellfeder gerichtete Hubbewegung aus, sondern zusätzlich noch die gewünschte Drehbewegung der Abtriebswelle, so daß eine den Kolben gegenüber der Zylinderwand abdichtende Dichtung diese aus Kolbenhub und Drehwinkel resultierende Gesamtbewegung vollziehen muß. Eine derartige Bewegungsform bedingt einen erhöhten Dichtungsverschleiß. Darüber hinaus ist die Betätigungsvorrichtung durch ihren komplexen Aufbau, insbesondere durch die innenseits an der Zylinderwand fixierten Mitnehmer-Rollen, nicht besonders montage- und wartungsfreundlich.

An die Drehantriebe für Scheibenventile wird darüber hinaus die Anforderung gestellt, daß beim Ein- und Ausfahren des drehbaren Verschlußteils in die bzw. aus der Sitzdichtung ein höheres Drehmoment als im vor- bzw. nachgeordneten Drehwinkelbereich zur Verfügung steht. Dies bedeutet nach den Regeln der Energieerhaltung, daß im Verlauf der Antriebsbewegung einem relativ großen axialen Kolbenhub ein relativ kleiner Drehwinkel der Drehwelle entspricht. Aus diesem Grunde wird die schraubengangförmige Führungsnut mit unterschiedlichen Steigungen versehen. In der vorstehend genannten Druckschrift **EP-B-0 622 574** ist eine Ausgestaltung der Führungsnut explizit dargestellt (Figur 3) und beschrieben, die, insgesamt gesehen, nicht punktsymmetrisch ausgebildet ist. Dadurch läßt sich der gewünschte Drehmomentverlauf gegenüber der Mittellage des Schließgliedes nur in der einen Endlage, im vorliegenden Falle beim Öffnen und Schließen des Verschlußstückes, verändern. In diesem Zusammenhang wird darüber hinaus vorgeschlagen, beim Öffnen und Schließen unterschiedliche Zuordnungen zwischen Linear- und Drehbewegung zu realisieren. Dies gelingt dadurch, daß die Kurvenführung je eine der Öffnungs- und Schließbewegung des Ventils zugeordnete Kurvenfläche (jeweilige Flankenfläche der Führungsnut) aufweist, die einen voneinander unterschiedlichen Kurvenverlauf aufweisen.

Um den Einsatz der gattungsgemäßen Betätigungsvorrichtungen möglichst variabel und flexibel zu gestalten, ohne daß es hierzu besonders aufwendiger Umrüstarbeiten bedarf, ist es wünschenswert, den Drehantrieb sowohl luftöffnend und damit zwangsläufig federschließend als auch luftschließend und damit zwangsläufig federöffnend einsetzen zu können. Dies erfordert einen exakt oder im wesentlichen punktsymmetrisch ausgebildeten Verlauf der Führungsnut. Eine derartige Führungsnut ist aus der **US-A-2 998 805** bekannt (Figur 8). Die Führungsnut ist dort exakt punktsymmetrisch ausgebildet, wodurch die jeweilige Endstellung des Schließgliedes (Schließstellung bzw. Offenstellung) mit der gleichen Drehmomentcharakteristik angefahren wird. Die anderen genannten Drehantriebe können aufgrund ihrer gegebenen Kinematik das vorliegende Problem entweder grundsätzlich nicht lösen (Gewindespindel/Gewindemutter-System in **DE 298 14 551 U1)** oder aber sie geben über diesen Aspekt keine konkreten Hinweise.

Es ist Aufgabe der vorliegenden Erfindung, eine Betätigungsvorrichtung der gattungsgemäßen Art zu schaffen, die einfach in ihrem Aufbau und wartungsfreundlich, zuverlässig und variabel im Einsatz ist und mit der ein gewünschter Drehwinkel leicht einstellbar und einzuhalten ist.

Diese Aufgabe wird durch die Merkmale im Kennzeichen des-Anspruchs 1 gelöst. Vorteilhafte Ausgestaltungen der vorgeschlagenen Betätigungsvorrichtung sind Gegenstand der Unteransprüche.

Die beiden allseits vom Kolbenschaft berandeten und damit in sich geschlossenen Führungsnuten ermöglichen durch ihre jeweilige punktsymmetrische Ausgestaltung einen variablen und damit universellen Einsatz der Betätigungsvorrichtung. Da der notwendige Drehmomentverlauf in den beiden Endbereichen der Führungsnut darstellbar ist, läßt sich der Antrieb sowohl luftöffnend und damit zwangsläufig federschließend als auch luftschließend und damit zwangsläufig federöffnend einsetzen. Die beiden alternativen Lösungen unterscheiden sich lediglich dadurch voneinander, daß das Verschlußteil des Ventils um 90 Grad verdreht gegenüber der jeweils anderen Lösung mit der in Frage kommenden erfindungsgemäßen Betätigungsvorrichtung verbunden wird. Darüber hinaus wird durch die beiden deckungsgleichen, diametral zueinander angeordneten Führungsnuten des Kolbenschaftes ein zuverlässiger und störungsfreier Einsatz der Betätigungsvorrichtung sichergestellt. Die beiderseitige Begrenzung des Kolbenhubes, einerseits durch Anlage des stirnseitigen Endes des Kolbenschaftes unmittelbar oder mittelbar am Deckelteil und andererseits über Anlage eines sich an den Kolbenschaft anschließenden Kolbenbodens unmittelbar oder mittelbar an einem Anschlagteil, der in einem Gehäuseboden des Gehäuses angeordnet ist, erlaubt.die exakte Begrenzung und Einstellung eines gewünschten Drehwinkels. Dabei ist in allen drei vorgenannten Ausführungsformen ist der Anschlagteil von außerhalb des Gehäuses in dessen Gehäuseboden eingeführt, so daß dadurch in jedem Falle die exakte Begrenzung und Einstellung des gewünschten Drehwinkels von außen auf einfache Art und Weise gegeben ist.

Eine erste vorteilhafte Ausführungsform sieht ein Anschlagteil vor, das unmittelbar im Gehäuseboden angeordnet und als unverstellbare Hubbegrenzung ausgebildet ist. Dieser fest und vorzugsweise auf Anschlag in den Gehäuseboden einschraubbare Anschlag kann im Zusammenwirken mit der maßlichen Tolerierung der in Frage kommenden Bauteile der Betätigungsvorrichtung so bemessen werden, daß die gewünschte Ausgangslage des drehbaren Verschlußteils des Ventils und darüber hinaus ein Drehwinkel von 90 Grad sichergestellt sind. Eine Voreinstellung und eine aufwendige Justierung des Anschlagteiles ist in der Regel nicht erforderlich.

Mit einer zweiten Ausführungsform der vorgeschlagenen Betätigungsvorrichtung ist die Ausgangsstellung des durch die Betätigungsvorrichtung angetriebenen drehbaren Verschlußteils exakt justierbar. Dies gelingt dadurch, daß ein Anschlagteil axial verstellbar in einer ersten Anschlag-Halterung angeordnet und diese unmittelbar im Gehäuseboden befestigt ist, und daß mit dem Anschlagteil die zugeordnete Endlage des Kolbens in einem Einstellbereich veränderbar ist, der durch einen zum Vollhub des Kolbens vergleichsweise kleinen Teilhub ± Δs bestimmt ist.

Sofern nicht nur eine Justierung der Ausgangsstellung des drehbaren Verschlußteils des Ventils gewünscht wird, sondern darüber hinaus eine Drehwinkelbegrenzung im Bereich des maximal 90 Grad betragenden Schaltwinkels, sieht eine weitere Ausführungsform der vorgeschlagenen Betätigungsvorrichtung vor, daß ein Anschlagteil axial verstellbar in einer zweiten Anschlag-Halterung angeordnet und diese unmittelbar im Gehäuse befestigt ist, und daß mit dem Anschlagteil die zugeordnete Endlage des Kolbens in einem Einstellbereich veränderbar ist, der durch den Vollhub des Kolbens bestimmt ist.

Nach einer bevorzugten Ausführungsform besteht der Kolben aus Kunststoff, und er ist auf seiner gesamten axialen Länge lückenlos mit einem metallischen Stützrohr ummantelt Der Werkstoff Kunststoff vereinfacht vor allem die Herstellung des Kolbens, und das Stützrohr dient zur Stabilisierung des Kolbens und gewährleistet hierdurch eine sichere und zuverlässige Übertragung hoher Schaltmomente.

Eine weitere bevorzugte Ausgestaltung der vorgeschlagenen Betätigungsvorrichtung sieht vor, daß die Querachse beiderseits und im jeweiligen Eingriffsbereich mit der zugeordneten Führungsnut jeweils auf einem durchmesserkleineren Lagerzapfen eine Lagerbuchse aus hochverschleißfestem und reibungsarmen Material trägt. Durch die reibungs- und verschleißarme Abrollbewegung zwischen der Querachse und den beiden deckungsgleichen, diametral zueinander angeordneten Führungsnuten werden kinematisch und kinetisch die denkbar günstigsten Voraussetzungen für einen zuverlässigen und sicheren Bewegungsablauf im Rahmen der Transformation zwischen Linear- und Drehbewegung geschaffen.

Weiter sieht eine vorteilhafte Ausgestaltung der vorgeschlagenen Betätigungsvorrichtung vor, daß an dem das Deckelteil durchdringenden Ende der Drehwelle ein Kupplungsteil lösbar befestigt ist, das in seinem stirnseitigen Endabschnitt eine Vierkantöffnung aufweist. Hierdurch ist es leicht möglich, die Betätigungsvorrichtung an unterschiedliche Bauarten von Ventilen und unterschiedliche Nennweiten, die beispielsweise durch Vierkante unterschiedlicher Größe antriebsseitig in Erscheinung treten, anzupassen.

Eine sichere und gefahrlose Demontage der Betätigungsvorrichtung wird, wie dies weiterhin vorgeschlagen wird, dadurch erreicht, daß die Rückstellfeder zwischen dem Kolbenboden und dem Deckelteil vorgespannt und dabei mittels der im Dekkelteil gelagerten Drehwelle in Verbindung mit der in die Führungsnuten eingreifenden Querachse formschlüssig gekammert ist Da die Querachse in den geschlossenen Führungsnuten verbleibt, kann sich die vorgespannte Rückstellfeder zwischen dem Kolbenboden und dem Deckelteil nur so weit entspannen, wie es die diesbezügliche axiale Erstreckung der Führungsnuten zuläßt.

Die Wartungsfreundlichkeit der vorgeschlagenen Betätigungsvorrichtung wird darüber hinaus durch eine bevorzugte Ausführungsform sichergestellt, bei der das Deckelteil an dem Gehäuse lösbar befestigt ist. Dies gelingt in besonders einfacher Weise durch einen sog. federelastischen Runddrahtring, der das Dekkelteil innerhalb der zylindrischen Umfangswand des Gehäuses formschlüssig und leicht lösbar fixiert.

Um eine druckmittelunterstützte oder eine ausschließlich durch Druckmittel bewirkte Rückführung des Kolbens zu ermöglichen, ist weiterhin vorgesehen, daß das Deckelteil außenseits gegenüber dem Gehäusemantel über eine zweite Dichtung und radial innenseits gegenüber der Drehwelle über eine dritte Dichtung abgedichtet ist, und daß der zwischen Gehäusemantel, Kolbenboden und Dekkelteil gebildete Raum eine Verbindungsöffnung zur Umgebung aufweist.

Zur Meldung der jeweiligen Endstellung der Betätigungsvorrichtung sieht ein weiterer Vorschlag vor, daß der Kolben an seiner dem Gehäuseboden zugewandten Stirnseite mit einer Kolbenstange lösbar verbunden ist, die durch den Gehäuseboden hindurchgeführt ist und in einem andererseits angeordneten und mit dem Gehäuse verbundenen, eine Rückmeldeeinrichtung aufnehmenden zusätzlichen Gehäuse endet. Da die axiale Stellung des Kolbens ein eindeutiger Indikator für den daraus resultierenden Drehwinkel bildet, kann dieser Drehwinkel somit über die Lage des Kolbens und damit über die mit diesem verbundene Kolbenstange in das Gehäuse für die Rückmeldeeinrichtung übertragen werden. Dort sind geeignete Rückmeldeeinrichtungen vorgesehen, die die Drehwinkelstellung des Antriebs entweder nach außen visualisieren oder entsprechende Steuersignale in eine zugeordnete Steuereinrichtung übertragen.

Um einen stetigen und ruckfreien Übergang zwischen den einzelnen Drehwinkelabschnitten zu erreichen, sieht eine weitere Ausführungsform vor, daß die Übergänge zwischen den mit unterschiedlichen Steigungswinkeln α, β ausgestatteten Verläufen der Führungsnut mit einem Abrundungsradius R ausgeführt sind, der wenigstens so groß wie der Außenradius der Lagerbuchsen ist.

Ausführungsbeispiele der Erfindung sind in der Zeichnung dargestellt und werden nachfolgend beschrieben. Es zeigen
- **Figur 1**: einen Mittelschnitt durch eine erste Ausführungsform der Betätigungsvorrichtung gemäß der Erfindung, wobei sich der Kolben unter der Wirkung einer Rückstellfeder in seiner ersten Endlage befindet;
- **Figur 2**: die Betätigungsvorrichtung gemäß Figur 1, wobei sich der Kolben infolge Druckmittelbeaufschlagung in seiner zweiten Endlage befindet;
- **Figur 3**: einen Querschnitt durch die Betätigungsvorrichtung gemäß Figur 2 entsprechend einem dort mit A-A gekennzeichneten Schnittverlauf;
- **Figur 4**: die Betätigungsvorrichtung gemäß Figur 2 entsprechend einem dort mit B-B gekennzeichneten Schnittverlauf;
- **Figur 5**: eine Abwicklung eines bevorzugten Verlaufs der in den Kolbenschaft eingearbeiteten schraubengangförmigen Führungsnuten;
- **Figur 6**: einen Mittelschnitt durch eine zweite Ausführungsform der Betätigungsvorrichtung gemäß der Erfindung, die gegenüber der Ausführungsform gemäß Figur 1 mit einem axial verstellbaren Anschlagteil ausgestattet ist und
- **Figur 7**: einen Mittelschnitt durch eine dritte Ausführungsform der Betätigungsvorrichtung gemäß der Erfindung, wobei ein axial verstellbares Anschlagteil vorgesehen ist, das gegenüber jenem gemäß Figur 6 einen größeren Einstellbereich realisiert.

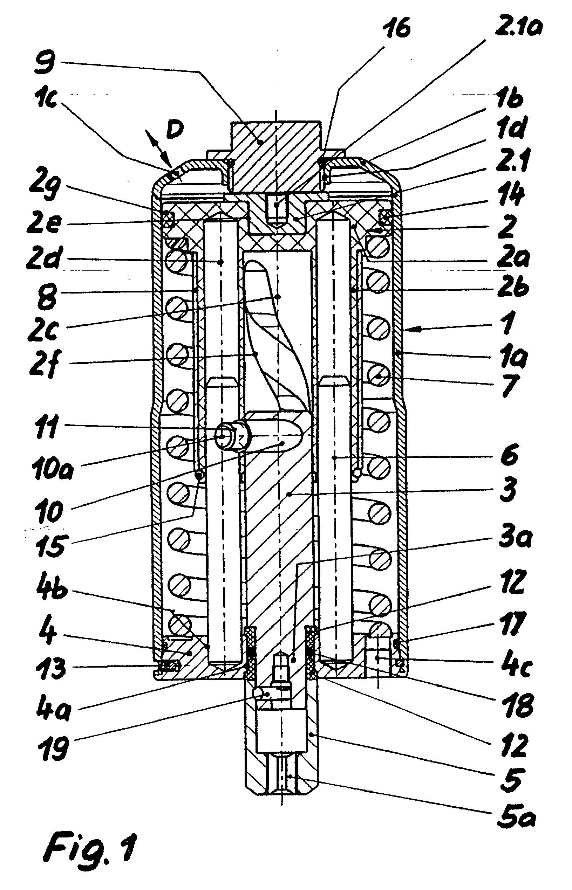

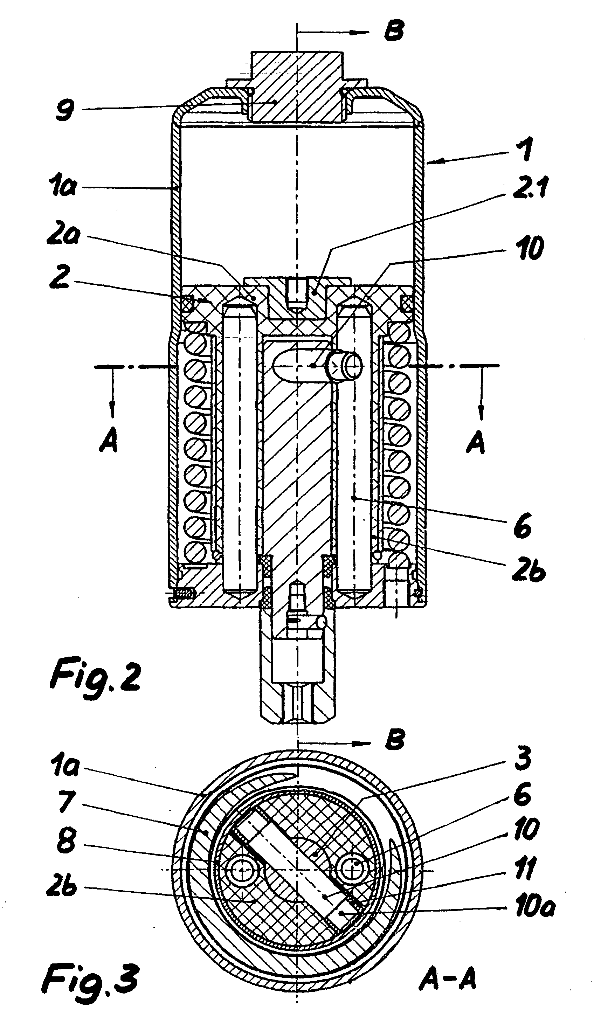

Die Betätigungsvorrichtung (**Figuren 1** und **2**) besteht, von außen gesehen, aus einem topfförmigen Gehäuse 1, welches einen im wesentlichen zylinderförmigen Gehäusemantel 1 a und einen daran vorzugsweise stoffschlüssig angesetzten Gehäuseboden 1b mit einem Druckmittelanschluß 1c für ein Druckmittel D aufweist, einem den Gehäusemantel 1a endseitig verschließenden Deckelteil 4, einer in dem Deckelteil 4 gelagerten, letzteren durchdringenden, zentralen Drehwelle 3, einem an dem Ende der Drehwelle 3 lösbar befestigten Kupplungsteil 5 und einem Anschlagteil 9, der in dem Gehäuseboden 1b vorzugsweise zentrisch angeordnet ist.

Bezogen auf die Darstellungslage ist im oberen Bereich des Gehäusemantels 1a ein Kolben 2 verschieblich gelagert, der aus einem Kolbenboden 2a und einem sich daran anschließenden, durchmesserkleineren Kolbenschaft 2b besteht. In der Mantelfläche des Kolbenbodens 2a ist eine Dichtungsnut 2g vorgesehen, die eine Kolbendichtung 14 zur Abdichtung des Kolbenbodens 2a gegenüber dem Gehäusemantel 1a aufnimmt. Zwischen dem gegenüber dem Kolbenschaft 2b radial vorspringenden Kolbenboden 2a und dem Deckelteil 4 ist eine vorzugsweise als zylindrische Schraubenfeder ausgebildete Rückstellfeder 7 angeordnet, die den Kolbenschaft 2b koaxial umschließt. In das dem Kolbenboden 2a abgewandte Ende des Kolbenschaftes 2b greift in letzteren eine zentrische Führungsbohrung 2c ein, die etwa am Beginn des Kolbenbodens 2a endet. In die sich aus den Abmessungen der zentrischen Führungsbohrung 2c ergebende Wandung des Kolbenschaftes 2b sind zwei deckungsgleiche, diametral zueinander angeordnete, schraubengangförmige Führungsnuten 2f eingearbeitet, die jeweils allseits vom Kolbenschaft 2b berandet sind und deren jeweiliger Verlauf im wesentlichen punktsymmetrisch ausgebildet ist. Die den Deckelteil 4 durchdringende und an der Durchdringungsstelle gelagerte Drehwelle 3 setzt sich im Innern des Gehäuses 1 so weit fort, daß sie auch in der durch die Rückstellfeder 7 bewirkten Endlage des Kolbens 2 noch hinreichend weit in die zentrische Führungsbohrung 2c im Kolbenschaft 2b eingreift. Die Drehwelle 3 wird in diesem Eingriffsbereich geführt und an ihrem dort befindlichen Endteil von einer Querachse 10 durchdrungen, die dort auch ihre Befestigung findet Die Querachse 10 trägt beiderseits und in ihrem jeweiligen Eingriffsbereich mit der zugeordneten Führungsnut 2f jeweils auf einem durchmesserkleineren Lagerzapfen 10a eine Lagerbuchse 11 aus hochverschleißfestem und reibungsarmen Material (s. auch **Figur 3**).

Der Kolben 2 wird vorzugsweise aus Kunststoff hergestellt. Dies hat gegenüber bekannten Lösungen aus Stahl den Vorteil, daß er sich einfach und günstig fertigen läßt und dabei erheblich leichter ausgeführt ist Um seine Stabilität auch bei der Übertragung hoher Drehmomente zu erhöhen, ist sein Kolbenschaft 2b auf dessen gesamter axialer Länge lückenlos mit einem metallischen Stützrohr 8 ummantelt. Letzteres wird auf dem Kolbenschaft 2b über einen an dessen Ende angeordneten Runddrahtsprengring 15 unverschieblich festgelegt. Im Kolbenschaft 2b ist weiterhin beiderseits und symmetrisch zu seiner Mittelachse jeweils eine Führungsbohrung 2d vorgesehen, in der jeweils eine Führungsstange 6, die jeweils ihrerseits in einer Stangenbohrung 4b im Deckelteil 4 befestigt ist, geführt wird.

An der Durchdringungsstelle der Drehwelle 3 mit dem Deckelteil 4 sind in einer in letzterem angeordneten zentrischen Lagerbohrung 4a zwei Lagerhülsen 12 mit axialem Abstand voneinander formschlüssig angeordnet, die radial innenseits einen zylindrischen Ansatz 3a der Drehwelle 3 aufnehmen. Zwischen den beiden einen nutförmigen, umlaufenden Ringraum freilassenden Lagerhülsen 12 ist ein dritter Dichtring 18, vorzugsweise ein O-Ring, angeordnet, der für eine Abdichtung der Drehwelle 3 an ihrer Durchdringungsstelle mit dem Deckelteil 4 sorgt. Auf dem über das Deckelteil 4 in die Umgebung hinausragenden zylindrischen Ansatz 3a ist das Kupplungsteil 5 aufgesetzt Es wird dort form- und kraftschlüssig, beispielsweise über einen als Knebelkerbstift ausgebildeten Stift 19, mit den zylindrischen Ansatz 3a verbunden. Zum Zwecke des Anschlusses der Betätigungsvorrichtung an verschiedene Typen von Ventilen und deren Nennweiten ist im stirnseitigen Endabschnitt des Kupplungsteils 5 eine Vierkantöffnung 5a vorgesehen, die die unterschiedlichsten Abmessungen aufweisen kann.

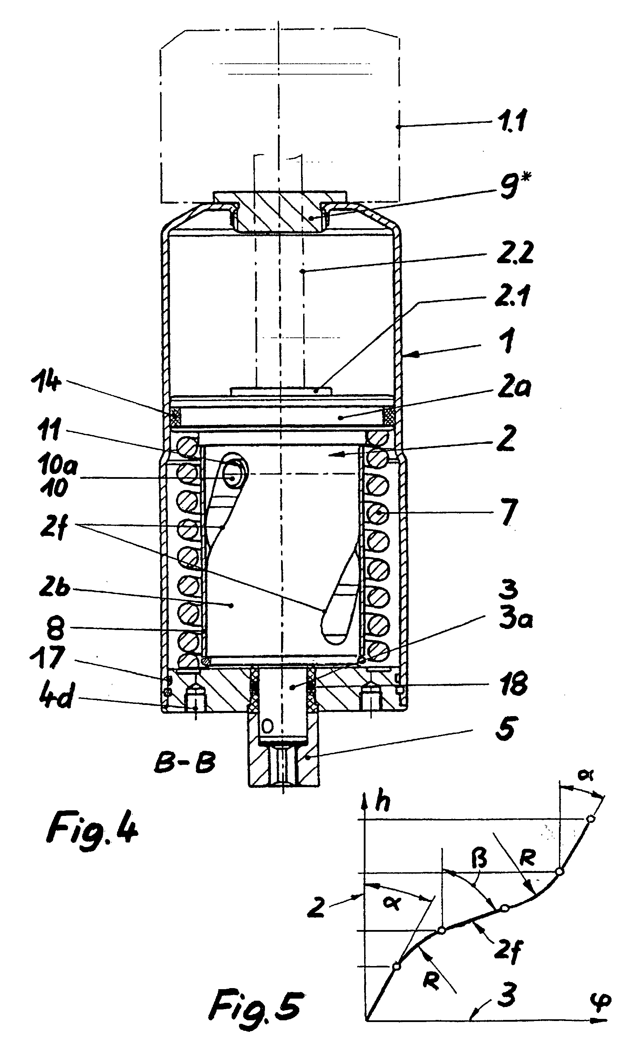

Das Deckelteil 4 ist im Gehäusemantel 1 a lösbar befestigt. Eine besonders wartungsfreundliche diesbezügliche Ausgestaltung ergibt sich bei Verwendung eines sogenannten federelastischen Runddrahtringes 13, der, nachdem er zwangsweise in die erforderliche Fügestellung verbracht wurde, anschließend durch elastische Rückverformung einen Formschluß zwischen Gehäusemantel 1 a und Deckelteil 4 realisiert. Ein zweiter Dichtring 17 sorgt für eine Abdichtung zwischen dem Deckelteil 4 und dem Gehäusemantel 1a. Zur notwendigen Be- und Entlüftung des zwischen Kolbenboden 2a und Deckelteil 4 gebildeten Raumes im Zuge der Schaltbewegung der Betätigungsvorrichtung oder zur druckmittelunterstützten oder zur allein durch Druckmittel bewirkten Rückführung des Kolbens 2 ist im Deckelteil 4 eine Verbindungsöffnung 4c zur Umgebung vorgesehen, über die die Ventilation bzw. die Druckmittelzufuhr oder -abfuhr erfölgt. Die Befestigung der Betätigungsvorrichtung auf einem nicht dargestellten Ventil erfolgt über wenigstens zwei Verbindungsbohrungen 4d im Deckelteil 4 (**Figur 4**).

In der Stirnseite des Kolbenbodens 2a ist vorzugsweise zentrisch eine zylindrische Ausnehmung 2e vorgesehen (**Figuren 1** und **2**), die einen mit einer zentrischen Gewindebohrung 2.1a versehenen Einsatz 2.1 aufnimmt. In einer im Gehäuseboden 1b vorzugsweise zentrisch angeordneten Einschrauböffnung 1d ist von außerhalb des Gehäuses 1 der Anschlagteil 9 eingeschraubt. Letzterer bildet einen festen Anschlag für den Kolben 2, der bei der vorliegenden Ausgestaltung mittelbar über den Einsatz 2.1 an dieser Stelle seine Hub- und damit Endlagenbegrenzung findet. Die zweite Hub- und damit Endlagenbegrenzung des Kolbens 2 findet letzterer durch Anlage seines stirnseitigen Endes des Kolbenschaftes 2b unmittelbar am Deckelteil 4 (**Figuren 2** und **4**). Ein erster Dichtring 16 sorgt für eine Abdichtung des Anschlagteiles 9 im Gehäuseboden 1a (**Figur 1**). Der Anschlagteil 9 wird hinsichtlich seines in den Gehäusemantel 1a hineinragenden Teils so bemessen, daß in der durch den Anschlagteil 9 begrenzten zugeordneten Endlage des Kolbens 2 die Drehwelle 3 und damit das durch die Betätigungsvorrichtung angetriebene drehbare Verschlußteil des Ventils exakt auf eine axiale oder eine um 90 Grad gegenüber dieser orientierte Stellung ausgerichtet ist.

Falls die jeweilige Stellung des drehbaren Verschlußteils des Ventils erfaßt und gemeldet werden soll, sieht eine weitere Ausführungsform der vorgeschlagenen Betätigungsvorrichtung vor, daß der Kolben 2 an seiner dem Gehäuseboden 1b zugewandten Stimseite mit einer Kolbenstange 2.2 (**Figur 4**) lösbar verbunden ist, die durch den Gehäuseboden 1b hindurchgeführt ist und in einem andererseits angeordneten und mit dem Gehäuse 1 verbundenen, eine Rückmeldeeinrichtung aufnehmenden zusätzlichen Gehäuse 1.1 endet. Die Kolbenstange 2.2 wird zu diesem Zweck in der Gewindebohrung 2.1 a des Einsatzes 2.1 befestigt und durch einen modifizierten Anschlagteil 9* abgedichtet hindurchgeführt.

Bei Beaufschlagung des oberhalb des Kolbens 2 im Gehäuse 1 gebildeten Raumes mit dem Druckmittel D (**Figuren 2** und **4**), vorzugsweise Druckluft (Druckmittelzufuhr **s. Figur 1**), wird der Kolben 2 gegen die Kraft der Rückstellfeder 7 translatorisch, ohne daß er sich verdrehen kann, nach unten verschoben. Aufgrund der im Kolbenschaft 2b angeordneten schraubengangförmigen Führungsnuten 2f, in die die auf der Querachse 10 angeordneten Lagerbuchsen 11 eingreifen, wird die Drehwelle 3 um einen entsprechenden Drehwinkel ϕΔ gedreht.

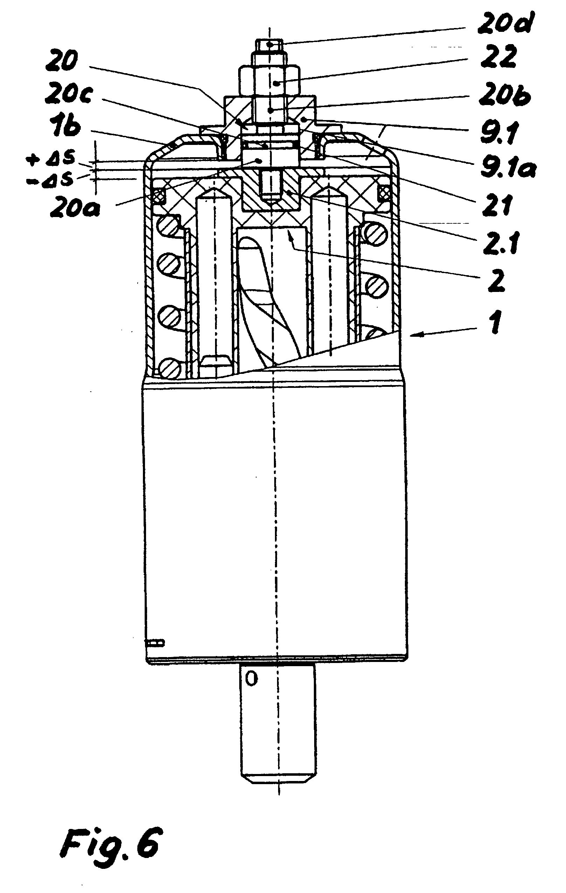

Die **Figur 5** verdeutlicht den mit der Erfindung realisierten Zusammenhang zwischen dem Drehwinkel ϕ der Drehwelle 3 und einem ursächlich hierfür verantwortlichen Hub h des Kolbens 2. Die Darstellung zeigt die Abwicklung der Führungsnut 2f, wobei im vorliegenden Falle ein exakter punktsymmetrischer Verlauf realisiert ist. Ein mittlerer Teil der Führungsnut 2f weist, bezogen auf die Achse des Kolbens 2, einen Steigungswinkel β auf, der größer ist als der jeweilige Steigungswinkel α an den beiden endseitigen Teilen der Führungsnut 2f. Die anzustrebende Gleichheit der gewünschten Drehmomentverläufe im Schließbereich des Ventils wird bei einer federschließenden und bei einer luftschließenden Betätigungsvorrichtung durch die Gleichheit der beiden endseitigen Steigungswinkel α erreicht. Ein stetiger und ruckfreier Übergang zwischen den mit unterschiedlichen Steigungswinkeln α und β versehenen Bereichen der Führungsnut 2f wird durch Ausrundung der Führungsnut 2f mit einem Abrundungsradius R sichergestellt, der wenigstens so groß wie der Außenradius der Lagerbuchsen 11 ausgeführt ist. Anstelle der vorstehend beschriebenen Lagerbuchsen 11 kann die über die Führungsnuten 2f bewirkte Mitnahme der Drehwelle 3 auch durch reibungs- und verschleißarm arbeitende gleit- oder wälzgelagerte Mitnehmerrollen 11 erfolgen.

Es versteht sich, daß alternativ zur Rückführung des Kolbens 2 allein mittels der Rückstellfeder 7 auch eine druckmittelunterstützte oder eine ausschließlich durch Druckmittel D bewirkte Rückführung des Kolbens 2 vorgesehen werden kann. Hierzu wird der Raum zwischen dem Kolbenboden 2a und dem Deckelteil 4, in dem sich unter anderem die im letztgenannten Fall dann verzichtbare Rückstellfeder 7 befindet, über die Verbindungsöffnung 4c mit Druckmittel D beaufschlagt. Die notwendige Abdichtung dieses Raumes ist durch die Dichtungen 17 und 18 bereits vorgesehen (**Figur 1**).

Ebenso ist auch eine andere als die vorgesehene Verdrehsicherung des Kolbens 2 gegenüber dem Gehäuse 1 ausführbar. Im vorgenannten Stand der Technik gibt es hierzu eine Reihe von Vorschlägen, wie das aus der Transformation zwischen Linearbewegung des Kolbens 2 und Drehbewegung der Drehwelle 3 resultierende Reaktionsmoment über den Kolben 2 in das Gehäuse 1 abgetragen werden kann (z.B. mittels Geradführung im Gehäusemantel 1a oder am Deckelteil 4; mittels radialem Versatz (Exzentrizität) zwischen der Kolben- und der Drehwellenachse).

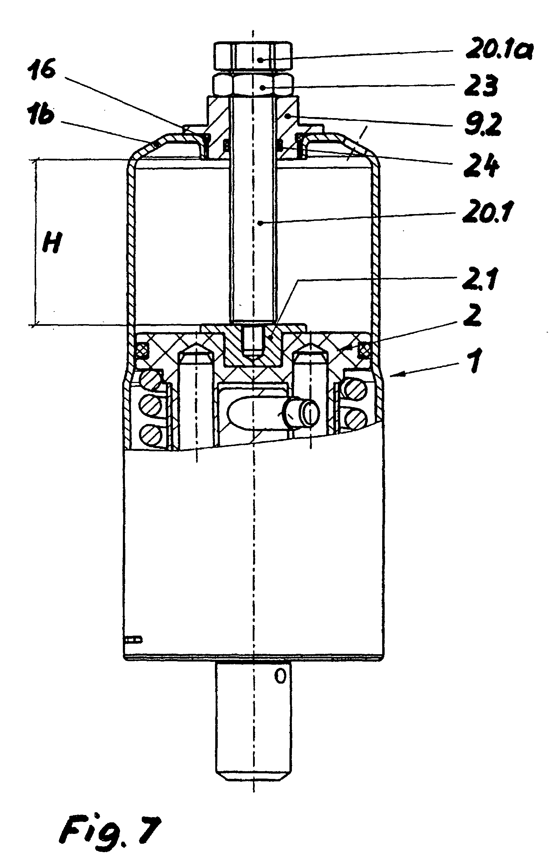

Eine exakte Einstellung und Justierung der dem Gehäuseboden 1 b zugeordneten Endlage des Kolbens 2 (**Figur 6**) wird durch einen Anschlagteil 20 erreicht, welcher axial verstellbar in einer ersten Anschlag-Halterung 9.1 angeordnet ist. Letztere ist, in gleicher Weise wie der Anschlagteil 9, unmittelbar im Gehäuseboden 1 b eingeschraubt und abgedichtet. Der Anschlagteil 20 besteht aus einem zylindrischen Kolbenteil 20a, das in einer zylindrischen Ausnehmung 9.1a abgedichtet geführt ist. Zu diesem Zwecke weist er eine umlaufende Dichtungsnut 20c auf, in der ein vierter Dichtungsring 21 angeordnet ist. Der Kolbenteil 20a ist oberhalb auf einen im Durchmesser kleineren Gewindeteil 20b reduziert, welcher durch die erste Anschlag-Halterung 9.1 hindurch- und aus letzterer in die Umgebung geführt ist. Am Ende des Gewindeteils 20b ist ein erster Mitnehmer 20d angeformt, über den der Anschlagteil 20 innerhalb der ersten Anschlag-Halterung 9.1 verdreht und damit axial verstellt werden kann. Die Sicherung einer bestimmten axialen Stellung des Anschlagteiles 20 erfolgt über eine erste Kontermutter 22, die sich auf dem aus der ersten Anschlag-Halterung 9.1 in die Umgebung hineinragenden Teil des Gewindeteiles 20b befindet. Mit Hilfe des Anschlagteiles 20 ist die zugeordnete Endlage des Kolbens 2 in einem Einstellbereich veränderbar, der durch einen zum Vollhub H (s. **Figur 7**) des Kolbens 2 vergleichsweise kleinen Teilhub ± Δs bestimmt ist. Der Kolben 2 stützt sich über den Einsatz 2.1 am Anschlagteil 20 ab.

**Figur 7** zeigt einen Anschlagteil 20.1, der in eine zweite Anschlag-Halterung 9.2 eingeschraubt und in dieser derart axial verstellbar ist, daß mit ihm die zugeordnete Endlage des Kolbens 2 in einem Einstellbereich veränderbar ist, der durch den Vollhub H des Kolbens 2 bestimmt ist. Die zweite Anschlag-Halterung 9.2 ist unmittelbar in den Gehäuseboden 1 b eingeschraubt und dort über den ersten Dichtring 16 abgedichtet. Das Bolzengewinde des Anschlagteils 20.1 ist über einen in der zweiten Anschlag-Halterung 9.2 angeordneten Gewindedichtring 24 gegenüber letzterer abgedichtet. Mit einer zweiten Kontermutter 23 wird der Anschlagteil 20.1 verdrehsicher und damit axial unverrückbar in der zweiten Anschlag-Halterung 9.2 festgelegt. Am Ende des Anschlagteils 20.1 ist ein zweiter Mitnehmer 20.1a, beispielsweise in Form einer Sechskantmutter, vorgesehen. Der Kolben 2 stützt sich über den Einsatz 2.1 am Anschlagteil 20.1 ab.

## Patentansprüche

1. Betätigungsvorrichtung für ein drehbares-Verschlußteil eines Ventils, insbesondere ein mit Druckmittel beaufschlagbaren Drehantrieb für ein Scheibenoder Drosselklappenventil, bestehend aus einem Gehäuse (1) mit einem Druckmittelanschluß (1c), einem innerhalb des Gehäuses (1) linear verschiebbaren, gegen einen Gehäusemantel (1a) abgedichteten Kolben (2), der bei Beaufschlagung mit einem Druckmittel (D) eine Hubbewegung gegen die Wirkung wenigstens einer Rückstellfeder (7) ausführt, einem am Kolben (2) angeordneten Kolbenschaft (2b), zwei diametral zueinander angeordneten, in den Kolbenschaft (2b) eingearbeiteten schraubengangförmigen Führungsnuten (2f), einem das Gehäuse (1) verschließenden Deckelteil (4), einer in dem Deckelteil (4) gelagerten zentralen Drehwelle (3), einer in der Drehwelle (3) befestigten, in die Führungsnuten (2f) eingreifenden Querachse (10), zwei in dem Deckelteil (4) befestigten, in den Kolben (2) eingreifenden und diesen gegen Verdrehen sichernden Führungsstangen (6), Vorkehrungen zur beiderseitigen Begrenzung eines Drehwinkels (ϕ) der Drehwelle (3) und mit einer Begrenzung des Hubs des Kolbens (2) einerseits über Anlage des stimseitigen Endes des Kolbenschaftes (2b) am Deckelteil (4) und andererseits über Anlage eines sich an den Kolbenschaft (2b) anschließenden Kolbenbodens (2a) an einem Anschlagteil (9; 20;20.1),
**dadurch gekennzeichnet,**
a) daß die Führungsnuten (2f) allseits vom Kolbenschaft (2b) berandet sind,
b) daß ihr jeweiliger Verlauf exakt oder im wesentlichen punktsymmetrisch ausgebildet ist, daß sie jeweils, bezogen auf die Achse des Kolbens (2), in einem mittleren Teil (Winkel β) einen größeren Steigungswinkel als in ihren beiden endseitigen Teilen (Winkel α) aufweisen,
c) und daß der Anschlagteil (9; 20; 20.1) von außerhalb des Gehäuses (1) in dessen Gehäuseboden (1b) eingeführt und ein Zugang zum Anschlagteil (9; 20; 20.1) von außen gegeben ist.

2. Betätigungsvorrichtung nach Anspruch 1, **dadurch gekennzeichnet, daß** der Anschlagteil (9) unmittelbar im Gehäuseboden (1b) angeordnet und als unverstellbare Hubbegrenzung ausgebildet ist.

3. Betätigungsvorrichtung nach Anspruch 1, **dadurch gekennzeichnet, daß** der Anschlagteil (20) axial verstellbar in einer ersten Anschlag-Halterung (9.1) angeordnet und diese unmittelbar im Gehäuseboden (1b) befestigt ist, und daß mit dem Anschlagteil (20) die zugeordnete Endlage des Kolbens (2) in einem Einstellbereich veränderbar ist, der durch einen zum Vollhub (H) des Kolbens (2) vergleichsweise kleinen Teilhub (± Δs) bestimmt ist.

4. Betätigungsvorrichtung nach Anspruch 1, **dadurch gekennzeichnet, daß** der Anschlagteil (20.1) axial verstellbar in einer zweiten Anschlag-Halterung (9.2) angeordnet und diese unmittelbar im Gehäuseboden (1b) befestigt ist, und daß mit dem Anschlagteil (20.1) die zugeordnete Endlage des Kolbens (2) in einem Einstellbereich veränderbar ist, der durch den Vollhub (H) des Kolbens (2) bestimmt ist.

5. Betätigungsvorrichtung nach einem der Ansprüche 1 bis 4, **dadurch gekennzeichnet, daß** der Kolbenschaft (2b) des aus Kunststoff ausgeführten Kolbens (2) auf seiner gesamten axialen Länge lückenlos mit einem metallischen Stützrohr (8) ummantelt ist.

6. Betätigungsvorrichtung nach einem der Ansprüche 1 bis 5, **dadurch gekennzeichnet, daß** die Querachse (10) beiderseits und im jeweiligen Eingriffsbereich mit der zugeordneten Führungsnut (2f) jeweils auf einem durchmesserkleineren Lagerzapfen (10a) eine Lagerbuchse (11) aus hochverschleißfestem und reibungsarmen Material trägt.

7. Betätigungsvorrichtung nach einem der Ansprüche 1 bis 6, **dadurch gekennzeichnet, daß** an dem das Deckelteil (4) durchdringenden Ende der Drehwelle (3) ein Kupplungsteil (5) lösbar befestigt ist, das in seinem stirnseitigen Endabschnitt eine Vierkantöffnung (5a) aufweist.

8. Betätigungsvorrichtung nach einem der Ansprüche 1 bis 7, **dadurch gekennzeichnet, daß** die Rückstellfeder (7) zwischen dem Kolbenboden (2a) und dem Deckelteil (4) vorgespannt und dabei mittels der im Deckelteil (4) gelagerten Drehwelle (3) in Verbindung mit der in die Führungsnuten (2f) eingreifenden Querachse (10) formschlüssig gekammert ist.

9. Betätigungsvorrichtung nach einem der Ansprüche 1 bis 8, **dadurch gekennzeichnet, daß** das Deckelteil (4) an dem Gehäuse (1) lösbar befestigt ist.

10. Betätigungsvorrichtung nach einem der Ansprüche 1 bis 9, **dadurch gekennzeichnet, daß** das Deckelteil (4) außenseits gegenüber dem Gehäusemantel (1a) über eine zweite Dichtung (17) und radial innenseits gegenüber der Drehwelle (3) über eine dritte Dichtung (18) abgedichtet ist, und daß der zwischen Gehäusemantel (1a), Kolbenboden (2a) und Deckelteil (4) gebildete Raum eine Verbindungsöffnung (4c) zur Umgebung aufweist.

11. Betätigungsvorrichtung nach einem der Ansprüche 1 bis 10, **dadurch gekennzeichnet, daß** der Kolben (2) an seiner dem Gehäuseboden (1b) zugewandten Stirnseite mit einer Kolbenstange (2.2) lösbar verbunden ist, die durch den Gehäuseboden (1b) hindurchgeführt ist und in einem andererseits angeordneten und mit dem Gehäuse (1) verbundenen, eine Rückmeldeeinrichtung aufnehmenden zusätzlichen Gehäuse (1.1) endet.

12. Betätigungsvorrichtung nach einem der Ansprüche 1 bis 11, **dadurch gekennzeichnet, daß** die Übergänge zwischen den mit unterschiedlichen Steigungswinkeln (α, β) ausgestatteten Verläufen der Führungsnut (2f) mit einem Abrundungsradius (R) ausgeführt sind, der wenigstens so groß wie der Außenradius der Lagerbuchsen (11) ist.

## Claims

1. An operating device for a rotatable closing element of a valve, in particular a rotary drive to which pressurized means may be applied, for a disk or throttle valve consisting of a housing (1) with a pressurized means connection (1c), a piston (2) movable linearly inside the housing and sealed off from a housing jacket (1a), which, when a pressurized means (D) is applied to it, executes a stroke movement against the action of at least one return spring (7), a piston shank (2b) mounted on the piston (2), two helical guide grooves (2f) mounted diametrically opposite each other and introduced into the piston shank (2b), a cover element (4) sealing the housing (1), a central rotating shaft (3) mounted in the cover element (4), a transverse shaft (10) fastened in the rotating shaft (3) and engaged in the guide grooves (2f), two guide rods (6) fastened in the cover element (4), engaging the piston (2) and securing it from twisting, provisions for limitation of an angle of rotation (j) of the rotating shaft (3) on both sides, and with a stop limiting the stroke of the piston (2) on one side by application of the front-end piston shank (2b) to the cover element (4) and on the other side by application of a piston base (2a) adjoining the piston shank (2b) to a stop element (9; 20; 20.1), ***characterized in that***
(a) the guide grooves (2f) are bounded on all sides by the piston shank (2b),
(b) the respective course of the grooves (2f) is designed to be exactly or more or less symmetrical at all points, ***in that*** each exhibits, in relation to the axis of the piston (2), in a central section (angle b) a greater angle of inclination than in their two end sections (angle a),
(c) and ***in that*** the stop element (9; 20; 20.1) is introduced from outside the housing (1) into the housing base (1b) and access to the stop element (9; 20; 20.1) from outside is provided.

2. The operating device as specified in Claim 1, *wherein* the stop element (9) is mounted directly in the housing base (1b) and is designed as fixed stroke limit means.

3. The operating device as specified in Claim 1, *wherein* the stop element (20) is mounted so as to be axially movable in a first stop mounting (9.1) and this mounting is fastened directly in the housing base (1b), *and wherein,* along with the stop element (20), the associated end Position of the piston (2) may be varied within a setting range which is determined by a partial stroke ( - Ds) which is small in comparison to the full stroke (H) of the piston.

4. The operating device as specified in Claim 1, *wherein* the stop element (20.1) is mounted so as to be axially movable in a second stop mounting (9.2) and this mounting is fastened directly in the housing base (1b), *and wherein*, along with the stop element (20.1), the associated end position of the piston (2) may be varied within a setting range which is determined by the full stroke (H) of the piston (2).

5. The operating device as specified in one of Claims 1 to 4, *wherein* the piston shank (2b) of the piston (2) made of plastic is enclosed over its entire axial length without gap in a metal supporting pipe (8).

6. The operating device as specified in one of Claims 1 to *5, wherein* the transverse axis (10) bears, on both sides and in the respective area of engagement with the associated guide groove (2f), a bearing bush (11) of highly wear-resistant and low-friction material, on a bearing pin (10a) smaller in diameter.

7. The operating device as specified in one of Claims 1 to 6, *wherein* there is removably fastened on the end of the rotating shaft (3) extending through the cover element (4) a coupling element (5) having a square opening (5a) in its frontal end section.

8. The operating device as specified in one of Claims 1 to 7, *wherein* the return spring (7) is pretensioned between the piston base (2a) and the cover element (4) and in the process positively compartmented by means of the rotating shaft (3) mounted in the cover element (4) in conjunction with the transverse axis (10) engaged in the guide grooves (2f).

9. The operating device as specified in one of Claims 1 to *8, wherein* the cover element (4) is removably fastened on the housing (1).

10. The operating device as specified in one of Claims 1 to 9, *wherein* the cover element (4) is sealed externally from the housing jacket (1a) by way of a second seal (17) and radially internally from the rotating shaft (3) by way of a third seal (18), *and wherein* the space formed between housing jacket (1a), piston base (2a), and cover element (4) has a connecting opening (4c) to the exterior.

11. The operating device as specified in one of Claims 1 to 10, *wherein* the piston (2) is removably connected on its frontal side facing the base (1b) of the housing to a piston rod (2.2) which extends through the base (1b) of the housing and ends in an additional housing (1.1) receiving a feedback device and connected to the housing (1).

12. The operating device as specified in one of Claims 1 to 11, *wherein* the transitions between the courses of the guide groove (2f) provided with different pitch angles (a, b) are executed with a rounding radius (R) which is at least as large as the external radius of the bearing bushings (11).

## Revendications

1. Dispositif d'actionnement pour un élément d'obturation rotatif d'une soupape, en particulier un entraînement rotatif admissible avec des moyens de pression pour une soupape à disque ou un robinet à papillon, composé d'une cage (1) avec un branchement de moyen de pression (1c), d'un piston (2) coulissant linéairement à l'intérieur de la cage (1), rendu étanche contre une garniture de cage (1a) et qui, en cas d'admission avec un moyen de pression (D), réalise un mouvement ascensionnel contre l'action d'au moins un ressort de rappel (7), d'un corps de piston (2b) disposé sur le piston (2), de deux rainures de guidage (2f) en forme de pas de vis creusées dans le corps de piston (2b), disposées diamétralement les unes aux autres, d'une partie couvercle (4) fermant la cage (1), d'un arbre de rotation central (3) logé dans la partie couvercle (4), d'un axe transversal (10) fixé dans l'arbre de rotation (3), engrenant dans les rainures de guidage (2f), de deux tiges de guidage (6) fixées dans la partie couvercle (4), engrenant dans les pistons (2) et protégeant celui-ci contre la torsion, de dispositifs pour la limitation des deux côtés d'un angle de rotation (ϕ) de l'arbre de rotation (3) et avec une limitation de la course du piston (2), d'une part, par l'installation de l'extrémité du côté frontal du corps de piston (2b) sur la partie couvercle (4) et, d'autre part, par l'installation d'une tête de piston (2a) contiguë au corps de piston (2b) sur une pièce de butée (9 ; 20 ; 20.1),
**caractérisé en ce que**
a) les rainures de guidage (2f) sont bordées de tous les côtés par le corps de piston (2b),
b) leurs tracés respectifs sont formés précisément ou en substance centro-symétriquement, qu'elles présentent chacune, par rapport à l'axe du piston (2), un plus grand angle de pas dans une partie médiane (angle β) que dans leurs deux parties extrêmes (angle α),
c) et **en ce que** la pièce de butée (9 ; 20 ; 20.1) à l'extérieur de la cage (1) est introduite dans le fond de la cage (1b) et un accès à la pièce de butée (9 ; 20 ; 20.1) de l'extérieur est possible.

2. Dispositif d'actionnement selon la revendication 1, **caractérisé en ce que** la pièce de butée (9) est disposée directement dans le fond de la cage (1b) et formée comme limitation de course fixe.

3. Dispositif d'actionnement selon la revendication 1, **caractérisé en ce que** la pièce de butée (20) est disposée de manière mobile axialement dans un premier support de butée (9.1) et celui-ci est fixé directement dans le fond de la cage (1b), et **en ce que** la position finale affectée du piston (2) est modifiable avec la pièce de butée (20) dans un domaine de réglage qui est déterminé par une course partielle (±Δs) relativement petite par rapport à la course complète (H) du piston (2).

4. Dispositif d'actionnement selon la revendication 1, **caractérisé en ce que** la pièce de butée (20.1) est disposée de manière mobile axialement dans un deuxième support de butée (9.2) et celui-ci est fixé directement dans le fond de la cage (1b), et **en ce que** la position finale affectée du piston (2) est modifiable avec la pièce de butée (20.1) dans un domaine de réglage qui est déterminé par la course complète (H) du piston (2).

5. Dispositif d'actionnement selon l'une quelconque des revendications 1 à 4, **caractérisé en ce que** le corps de piston (2b) du piston réalisé en plastique (2) est complètement enveloppé d'un tube support métallique (8) sur toute sa longueur axiale.

6. Dispositif d'actionnement selon l'une quelconque des revendications 1 à 5, **caractérisé en ce que** l'axe transversal (10) porte une douille de palier (11) en matériau hautement résistant à l'usure et à frottement réduit des deux côtés et dans le domaine d'action correspondant avec la rainure de guidage (2f) affectée chacune sur un tourillon de diamètre plus petit (10a).

7. Dispositif d'actionnement selon l'une quelconque des revendications 1 à 6, **caractérisé en ce que** sur l'extrémité traversant la partie couvercle (4) de l'arbre de rotation (3), une pièce d'accouplement (5) qui présente une ouverture carrée (5a) dans sa section finale du côté frontal est fixée de manière amovible.

8. Dispositif d'actionnement selon l'une quelconque des revendications 1 à 7, **caractérisé en ce que** le ressort de rappel (7) est prétendu entre la tête de piston (2a) et la partie couvercle (4) et ainsi, compartimenté au moyen de l'arbre de rotation (3) logé dans la partie couvercle (4) en liaison avec l'axe transversal (10) engrenant dans les rainures de guidage (2f) à engagement positif.

9. Dispositif d'actionnement selon l'une quelconque des revendications 1 à 8, **caractérisé en ce que** la partie couvercle (4) est fixée de manière amovible à la cage (1).

10. Dispositif d'actionnement selon l'une quelconque des revendications 1 à 9, **caractérisé en ce que** la partie couvercle (4) est rendue étanche à l'extérieur vis-à-vis de la garniture de cage (1a) via un deuxième joint (17) et radialement à l'intérieur vis-à-vis de l'arbre de rotation (3) via un troisième joint (18), et **en ce que** l'espace formé entre la garniture de cage (1a), la tête de piston (2a) et la partie couvercle (4) présente une ouverture de liaison (4c) vers l'environnement.

11. Dispositif d'actionnement selon l'une quelconque des revendications 1 à 10, **caractérisé en ce que** le piston (2) de son côté frontal tourné vers le fond de la cage (1b) est relié de façon amovible à une tige de piston (2.2), qui est passée à travers le fond de la cage (1b) et qui termine dans une cage supplémentaire (1.1) recevant un dispositif de correction disposé de l'autre côté et relié à la cage (1).

12. Dispositif d'actionnement selon l'une quelconque des revendications 1 à 11, **caractérisé en ce que** les passages entre les tracés de la rainure de guidage (2f) munis d'angles de pas différents (α, β) sont réalisés avec un rayon de l'arrondi (R) qui est au moins égal au rayon extérieur de la douille de palier (11).
